# FASCICULE DE BREVET EUROPEEN

(11) **EP 3 101 084 B1**
(45) Date de publication et mention de la délivrance du brevet: **27.11.2019**
(21) Numéro de dépôt: 16172899.3
(22) Date de dépôt: 03.06.2016
(51) Int. Cl.: C09K 5/16, F25D 5/00, F28D 20/00

(54) **PRODUIT POUR RÉACTEUR THERMOCHIMIQUE**
PRODUKT FÜR THERMOCHEMISCHEN REAKTOR
PRODUCT FOR THERMOCHEMICAL REACTOR

(30) Priorité: 04.06.2015 FR 1555101
(43) Date de publication de la demande: 07.12.2016
(73) Titulaire: COLDINNOV, 31300 Toulouse (FR)
(72) Inventeur: Juillard, Jean-Louis, 21510 Aignay Le Duc (FR); Bataille, Lionel, 31770 Colombiers (FR)
(74) Mandataire: Ipside

(56) Documents cités:
- BE-A1- 889 441
- FR-A1- 2 687 462
- FR-A1- 2 873 793
- FR-A1- 2 995 062

## Description

### Domaine de l'invention

La présente invention vise le domaine des appareils de transfert et stockage de l'énergie thermique.

Plus particulièrement, la présente invention s'applique au domaine des réacteurs thermochimiques. Elle concerne un produit destiné à être mis en oeuvre dans un réacteur thermochimique pour la production d'énergie thermique par réaction avec un fluide réactif, ainsi qu'un réacteur thermochimique comportant un tel produit, un procédé de montage dudit produit dans un réacteur thermochimique et un kit pour la mise en oeuvre dudit procédé de montage.

### État de la technique

Il est connu d'utiliser des systèmes thermochimiques pour la production de froid et/ou de chaleur. Ces systèmes sont fondés sur les variations thermiques résultant de transformations physico-chimiques d'un couple de composés aptes à interagir l'un avec l'autre. Typiquement, l'un des composés est un fluide, et l'autre composé est un composé réactif solide s'associant avec le fluide quand ils sont mis en contact à une température donnée, mais se dissociant lorsque la température augmente.

Le fluide peut être sous forme gazeuse ou sous forme liquide selon les conditions de température et de pression auxquelles il est soumis. Dans certains systèmes, il est conservé à l'état liquide dans un réservoir qui est séparé par une vanne du réacteur contenant le composé réactif solide. A l'ouverture de la vanne, le fluide subit une expansion au cours de laquelle il se vaporise et va réagir chimiquement avec le composé réactif solide. Le changement d'état du fluide (de liquide à gazeux) consomme de l'énergie et induit par conséquent une baisse de température au niveau du réservoir ou de l'évaporateur si une vanne de détente du fluide est placée entre le réservoir et le réacteur. Au contraire, la réaction chimique entre le composé gazeux et le composé réactif solide est exothermique et provoque un dégagement de chaleur au niveau du réacteur. A l'équilibre, après vaporisation totale du fluide ou lorsque le composé réactif solide est saturé, la réaction chimique s'arrête ainsi que la production de froid et de chaleur.

Il est ensuite possible de régénérer le système en chauffant le composé réactif solide, ce qui provoque la séparation du composé réactif solide et du composé gazeux. De ce fait, on observe une montée de la pression dans le système et une condensation du gaz qui se retrouve à l'état liquide dans le réservoir. Le composé réactif solide ainsi régénéré est apte à réagir dans un nouveau cycle de réfrigération-chauffage.

Il est connu de mettre à profit les phases alternées de production et d'absorption de chaleur d'un tel système, selon les besoins pour chauffer ou refroidir un compartiment auquel on l'associe par l'intermédiaire d'un dispositif thermiquement conducteur.

Un tel procédé est divulgué par le document FR 2 873 793, qui décrit le couplage d'un processus de transition de phase d'un fluide tel que l'ammoniac NH₃ (par évaporation et condensation), et d'une réaction chimique fortement exothermique d'absorption du fluide gazeux par un milieu réactif solide à base d'un sel réactif, notamment du chlorure de calcium CaCl₂ ou du chlorure de baryum BaCl₂. Point essentiel, cette réaction est renversable et permet par chauffage de régénérer le composé réactif solide et de récupérer le gaz initial (phase de désorption du gaz).

Il est également connu de la demande de brevet FR 2 995 062 A1, un réacteur pour le stockage et la libération d'énergie thermique, de type à lit fixe, comportant au moins un empilement d'une couche d'un premier sel hygroscopique A sur une couche d'un deuxième sel hygroscopique B et, comportant en outre, une structure à mailles ouvertes séparant la couche du premier sel de la couche du deuxième sel.

La demande de brevet FR 2 687 462 A1 divulgue quant à elle un dispositif pour produire du froid et/ou de la chaleur par réaction chimique comprenant au moins quatre réacteurs contenant chacun un sel susceptible de réagir chimiquement avec un gaz. Elle divulgue notamment que le sel peut être mélangé à du graphite naturel expansé, le mélange étant éventuellement recomprimé.

Le milieu réactif solide présent dans le réacteur est communément constitué d'une matrice en graphite naturel expansé (GNE) dans laquelle un composé réactif solide est inséré.

Dans un tel milieu réactif solide à base de GNE et d'un composé réactif solide, les transferts massiques (en gaz) et thermiques (refroidissement du milieu réactif solide en phase d'absorption et chauffage en phase de régénération) s'effectuent de manière privilégiée selon une orientation radiale et non longitudinale. Ce phénomène bien connu s'explique par la structure en feuillets du graphite qui est responsable de l'anisotropie de toutes les propriétés physiques du graphite. En particulier, sa conductivité thermique est très différente dans le plan des feuillets et dans la direction perpendiculaire.

Lors de la fabrication du milieu composite GNE/composé réactif solide, un mélange de granulats de GNE et d'un composé réactif solide est comprimé dans un moule, ce qui oriente les feuillets de graphite selon un plan perpendiculaire au sens de la compression, le composé réactif solide venant s'intercaler dans l'espace laissé entre ces feuillets. Les couches ainsi formées dans le bloc de milieu réactif solide se retrouvent orientées selon des plans perpendiculaires à l'axe longitudinal du réacteur cylindrique, ce qui va favoriser la conductivité thermique radiale.

Suivant un protocole de fabrication courant du milieu réactif solide, le composé réactif solide est ainsi d'abord séché dans une étuve réglée entre 150°C et 200°C environ pendant plusieurs heures, puis broyé pour atteindre une granulométrie de l'ordre de 100 µm, ou inséré dans une matrice feuilletée primaire. Il est alors maintenu en température pour éviter toute absorption d'humidité. Dans une seconde étape du mode opératoire, le composé réactif solide est mélangé au GNE, puis l'ensemble est comprimé comme décrit précédemment.

Il peut ainsi être réalisé plusieurs blocs (ou morceaux) de milieu réactif de géométrie complémentaire pour se conformer, une fois associés, à la géométrie du logement de réception du réacteur thermochimique dans lequel ce milieu réactif est destiné à être mis en œuvre.

Ces morceaux sont ensuite classiquement maintenus en température et/ou dans un milieu à faible hygrométrie pour les protéger le mieux possible d'une reprise d'humidité ambiante.

La troisième étape du mode opératoire consiste à assembler, dans le réacteur ouvert, les blocs préalablement formés, puis de fermer le réacteur par soudure ou collage/moulage dans le cas d'un matériau thermodurcissable.

Si les réacteurs thermochimiques ainsi formés permettent, par mise en contact d'un fluide réactif avec le composé réactif solide ainsi inséré dans le réacteur thermochimique, de produire de la chaleur, leur spectre de performance est cependant limité en termes de réactivité, de température et de cinétique de réaction, en phase de désorption ou en phase d'absorption. En effet, lorsque la température de la source chaude utilisée pour la régénération du composé réactif solide est fluctuante dans le temps, par exemple si elle dépend d'une source intermittente, variable en puissance et difficilement prévisible, telle que par exemple l'énergie solaire thermique, il devient nécessaire d'adapter le milieu réactif solide par rapport à la température de la source chaude. Ceci s'avère délicat puisque, si la température minimum de régénération, qui est fonction du composé réactif solide, n'est pas fournie, le système thermochimique s'arrête. L'objectif étant d'obtenir des performances de réacteur thermochimique toujours importantes voire constantes, pour pallier ces inconvénients, l'art antérieur propose de procéder à une adaptation du couple « milieu réactif solide/fluide réactif » à la température de la source chaude utilisée pour la régénération du composé réactif solide. Ceci s'effectue par un changement de réacteur thermochimique. Cependant, un tel changement de réacteur thermochimique est contraignant et chronophage dans un processus industriel.

C'est pourquoi, la présente invention vise à proposer une solution pour améliorer les performances d'un réacteur thermochimique, qui soit moins contraignante et plus rapide à mettre en œuvre.

### Objet de l'invention

À cet effet, selon un premier aspect, la présente invention concerne un produit destiné à être mis en oeuvre dans un réacteur thermochimique pour la production d'énergie thermique par réaction avec un fluide réactif, qui comporte un milieu réactif solide comprenant au moins deux composés réactifs différents sous forme solide, chacun desdits deux composés réactifs étant apte à réagir chimiquement avec ledit fluide réactif pour produire de la chaleur, ledit milieu réactif solide se présentant sous forme d'au moins deux blocs distincts, de préférence juxtaposés ou empilés, chacun desdits blocs comportant respectivement un desdits composés réactifs différents et, ledit produit comportant au moins un élément séparateur apte à empêcher la migration de composé(s) réactif(s) d'un bloc de milieu réactif solide vers un autre bloc, ledit élément séparateur étant intercalé entre des blocs de milieu réactif solide différents et étant de préférence inerte vis-à-vis du fluide réactif caractérisé en ce que, l'élément séparateur est dépourvu de composé réactif vis-à-vis du fluide réactif et comprend du graphite naturel expansé.

La présence de plusieurs réactifs différents au sein du milieu réactif solide a pour avantage, lors de la mise en œuvre de ce milieu réactif au sein d'un réacteur thermochimique, de couvrir un spectre élargi de performances en termes de réactivité, de température et de cinétique de réaction, en phase de désorption ou en phase d'absorption, et cela sans avoir à changer de réacteur thermochimique. Cela est donc moins contraignant à réaliser.

Il a en outre été constaté par les présents inventeurs, que, de manière surprenante, malgré le fait que, par rapport aux confections de l'art antérieur dans lesquelles le milieu réactif solide disposé dans un réacteur thermochimique ne contient qu'un seul composé réactif, le milieu réactif solide selon l'invention, comprenant au moins deux composés réactifs différents, pour une même quantité de composé réactif, certes, peut présenter une performance moindre à une température de source chaude donnée, mais cette baisse de performance n'est que très limitée, inférieure ou égale à 10% à 15%, et elle est largement compensée par rapport à l'avantage important d'une performance du réacteur thermochimique « maintenue » malgré des fluctuations de température de la source chaude. En particulier, la présente invention évite avantageusement que, pour un composé réactif solide donné, si la température de régénération du composé réactif solide n'est pas fournie, le réacteur thermochimique ne présente une performance nulle (si bien qu'aucune régénération du composé réactif solide n'est alors possible), comme c'est le cas pour les réacteurs thermochimiques de l'art antérieur comportant un seul composé réactif solide. L'invention est ainsi particulièrement avantageuse pour une mise en œuvre dans des réacteurs thermochimiques fonctionnant avec une source chaude dont la température est susceptible de fluctuer.

Il doit être compris par milieu réactif solide, un milieu solide, composite ou non, apte à absorber par combinaison chimique un fluide et à désorber ce fluide par réaction chimique inverse, sous l'effet d'une élévation de température, la mise en contact des composés réactifs du milieu réactif solide avec le fluide réactif provoquant en outre un dégagement de chaleur.

Il doit être compris par « bloc », un morceau compact de milieu réactif solide.

Dans le cas d'une pluralité de blocs, ceux-ci sont de préférence de géométrie complémentaire pour se conformer, une fois associés, à la géométrie du logement de réception du milieu réactif solide dans le réacteur thermochimique.

D'un point de vue géométrique, plusieurs configurations sont possibles. Le cas le plus simple, pour un logement de réception cylindrique, est celui d'une superposition dans le logement de réception de blocs/galettes de milieu réactif solide. On peut imaginer aussi que selon une variante, un même bloc de milieu réactif est composé de portions de bloc, par exemple de deux demi-blocs de composition différente juxtaposés (deux demi-blocs ou quatre quarts de bloc ou plus). On peut aussi imaginer que dans le cas de juxtaposition de portions de bloc, l'agencement soit réalisé en portions de bloc annulaires concentriques pour favoriser l'accès du gaz à l'anneau central par une lumière centrale.

Les blocs de milieu réactif solide peuvent être fabriqués de manière classique en elle-même. Au sein d'un produit selon l'invention on peut observer un phénomène de migration de particules de composé réactif. Cette migration de particules de composé réactif est provoquée par l'alternance des cycles d'absorption du fluide réactif en dépression et de désorption du fluide réactif sous pression, qui entraine une succession de gonflements et de dégonflements du ou des blocs de milieu réactif solide.

La première conséquence est que les particules de composé réactif peuvent s'agglutiner à proximité immédiate des moyens de diffusion du fluide réactif dans le réacteur, et colmater ces moyens de diffusion, ce qui freine le fluide réactif et peut provoquer une baisse des performances du réacteur thermochimique.

La seconde conséquence est que le bloc de milieu réactif solide contenant le composé réactif qui absorbe prioritairement le fluide réactif, peut gonfler et s'expanser naturellement vers les blocs de milieu réactif environnants. Ce phénomène entraine une migration des composés réactifs du bloc de milieu réactif solide en expansion vers le bloc voisin, leur mélange avec les composés réactifs du bloc voisin et une restriction, du transfert du fluide réactif vers ce bloc voisin.

L'élément séparateur permet avantageusement d'empêcher ou au moins de réduire ce phénomène de migration. Mais l'élément séparateur comprenant du graphite naturel expansé (GNE) possède d'autres avantages.

En effet, l'invention tire avantageusement profit des caractéristiques de conduction thermique du GNE pour assurer que l'échange thermique entre le milieu réactif solide et la paroi du réacteur thermochimique comprenant le milieu réactif solide, soit amélioré en intercalant entre les blocs comportant chacun un composé réactif différent, au moins un élément séparateur comprenant du GNE.

De plus, une telle caractéristique permet avantageusement d'assurer que les échanges thermochimiques ne soient pas perturbés par la présence de l'élément séparateur à base de GNE.

Le GNE, lorsqu'il est pur, présente une meilleure conduction thermique que lorsqu'il est mélangé à un composé réactif solide. Dans un mode de réalisation de la présente invention, l'élément séparateur est constitué de GNE.

La présence d'au moins un élément séparateur comprenant du GNE ou constitué de GNE intercalé entre les blocs de milieu réactif solide comportant des composés réactifs différents favorise donc les échanges thermiques avec toute la surface de la paroi du réacteur thermochimique et pas seulement avec les parties de ladite paroi qui sont en vis-à-vis des blocs de milieu réactif solide comportant un composé réactif.

L'épaisseur d'un élément séparateur est de préférence telle qu'elle permet d'assurer sa tenue mécanique lors des manipulations sans occuper un espace important dans le réacteur, en comparaison de l'espace occupé par les blocs comportant un composé réactif.

Dans des modes de réalisation particuliers de l'invention, les composés réactifs sont choisis de sorte à ce qu'un premier des composés réactifs comporte une plage de température de régénération, en phase de désorption du fluide réactif au sein d'un réacteur thermochimique, qui ne recoupe pas entièrement une plage de température de régénération d'un deuxième des composés réactifs en phase de désorption dudit fluide réactif dans les mêmes conditions opératoires, notamment de température et de pression, visées pour la mise en œuvre du réacteur thermochimique. Ainsi, de manière avantageuse, le réacteur thermochimique contenant un tel produit est capable de fonctionner d'autant mieux avec une source chaude de température fluctuante, notamment dans des cas où la température de régénération d'un des composés réactifs solides n'est pas fournie mais que celle d'un ou des autre(s) composé(s) réactif(s) compris dans le réacteur thermochimique est fournie.

Dans des modes de réalisation particuliers, les composés réactifs différents sont des sels réactifs différents. Les sels réactifs différents peuvent être par exemple choisis parmi les chlorures ammoniacates, par exemple, CaCl₂, LiCl, CuCl₂, SrCl₂, ZnCl₂,... Toute combinaison de deux ou plus de ces sels réactifs entre dans le cadre de la présente invention. Des milieux réactifs solides comportant de tels sels réactifs sont en particulier susceptibles de s'expanser lors de l'absorption du fluide et de se rétracter lors de la désorption du fluide.

Dans des modes de réalisation particuliers, le milieu réactif solide comprend du graphite naturel expansé (GNE), en tant que matrice support des composés réactifs.

Dans des modes de réalisation particuliers, dans lesquels le milieu réactif se présente sous forme d'une pluralité de blocs, au moins un desdits bloc a une densité plus faible que les autres blocs.

Dans des modes de réalisation particuliers, dans lesquels le milieu réactif se présente sous forme d'une pluralité de blocs, au moins un desdits bloc a une teneur en composé réactif plus faible que la teneur en composé réactif des autres blocs.

En règle générale, pour les applications de l'invention nécessitant une production thermique de forte puissance, on cherche à maximiser le transfert du fluide réactif (par exemple sous forme de gaz) dans le milieu réactif solide dans un réacteur, en facilitant la diffusion du fluide réactif dans le milieu réactif solide, et donc en favorisant un accès du fluide réactif le plus régulier possible en tout point du logement de réception du milieu réactif solide du réacteur thermochimique. Il est donc intéressant pour les utilisations d'un réacteur thermochimique demandant une forte puissance en début de production de froid ou de chaleur, de placer dans le réacteur des blocs de milieu réactif de plus faible densité et/ou ayant une plus faible teneur en composé(s) réactif(s) (ceci étant obtenu en utilisant une teneur plus forte en GNE par exemple, ce matériau présentant une meilleure conduction thermique) pour favoriser les transferts de masse et de chaleur.

Par exemple, dans des modes de réalisation particuliers dans lesquels les composés réactifs solides sont des sels, la teneur en sel dans le milieu réactif solide est de l'ordre de 50% à 70% en masse. Cela permet d'augmenter sensiblement la puissance immédiate du réacteur thermochimique sans trop pénaliser le coût du réacteur thermochimique par unité de volume.

De même, dans des modes de réalisation particuliers, la masse volumique des blocs de milieu réactif solide est de l'ordre de 250 à 340 kg/m³. Cela permet d'augmenter sensiblement la puissance immédiate du réacteur thermochimique sans trop pénaliser le coût du réacteur thermochimique par unité de volume.

Dans des modes de réalisation particuliers, au moins un bloc de milieu réactif solide comportant au moins un des composés réactifs différents est contenu dans une enveloppe de protection thermiquement conductrice.

Cette enveloppe de protection a pour avantage de protéger le milieu réactif solide des dégradations liées au transport, au stockage et à la manutention, tout en permettant une intégration aisée ultérieure dans le réacteur. En effet, cette enveloppe de protection protège le milieu réactif solide qu'elle contient en empêchant, ou au moins diminuant, le contact direct du milieu réactif solide avec les manipulateurs du milieu réactif solide, et de manière générale, avec tout élément contenu dans le milieu extérieur à l'enveloppe de protection et avec lequel elle est susceptible d'être mise en contact.

Cette enveloppe de protection facilite également avantageusement la manipulation du milieu réactif solide, car elle est plus facilement saisissable et manipulable. L'ensemble est ainsi plus facile à manipuler et à insérer dans un réacteur thermochimique.

On entend dans la présente description, par « enveloppe de protection thermiquement conductrice », le fait que cette enveloppe de protection ne constitue pas une barrière thermique si bien que le produit selon l'invention peut être mis en place tel quel dans le réacteur thermochimique, sans séparer le milieu réactif solide de l'enveloppe de protection, et que l'enveloppe de protection n'influe alors avantageusement pas sur les échanges de chaleur se produisant dans les réacteurs thermochimiques. On englobe notamment, dans l'expression, aussi bien les enveloppes de protection perforées, les flux thermiques pouvant alors circuler dans les perforations formées dans l'enveloppe de protection, que les enveloppes de protection formées dans un matériau thermiquement conducteur.

Dans des modes de réalisation particuliers, plusieurs blocs de milieu réactif solide sont contenus dans la même enveloppe.

Selon un deuxième aspect, la présente invention vise un réacteur thermochimique comportant un produit objet de la présente invention, répondant à l'une ou plusieurs des caractéristiques ci-avant, ledit produit étant disposé dans un logement de réception de milieu réactif solide dudit réacteur thermochimique.

Dans des modes de réalisation particuliers, le produit comportant un milieu réactif solide se présente sous forme d'au moins deux blocs distincts de milieu réactif solide, lesdits blocs étant juxtaposés ou empilés dans le logement de réception de milieu réactif solide dudit réacteur thermochimique, et étant séparés par un élément séparateur dépourvu de composé réactif vis-à-vis du fluide réactif et comprenant du graphite naturel expansé.

Selon un autre aspect, la présente invention vise un procédé de montage d'un produit selon l'invention dans un réacteur thermochimique pour la production d'énergie thermique par réaction avec un fluide réactif, comportant la mise en place dudit produit dans un logement de réception de milieu réactif solide dudit réacteur thermochimique.

Dans des modes de réalisation particuliers du procédé de montage, le produit comporte un milieu réactif solide se présentant sous forme d'au moins deux blocs distincts, lesdits blocs étant de préférence juxtaposés ou empilés dans le logement de réception de milieu réactif solide du réacteur thermochimique, le cas échéant séparés par un élément séparateur dépourvu de composé réactif vis-à-vis du fluide réactif et comprenant du graphite naturel expansé.

Les blocs de composition différente peuvent être placés indifféremment les uns par rapport aux autres, l'essentiel étant que le fluide réactif puisse cheminer entre les feuillets du milieu réactif solide. Si la géométrie du réacteur le permet, on placera de préférence les blocs contenant un composé réactif travaillant à la température de désorption la plus faible au plus près des moyens de diffusion du fluide réactif, pour que cette diffusion du fluide réactif en phase d'absorption comme en phase de désorption ne soit pas freinée par un cheminement au travers de blocs de milieu réactif déjà saturés en gaz absorbé, et donc présentant des feuillets contenant un composé réactif ayant subi un gonflement, et par conséquence présentant une porosité moindre, dû à l'absorption du fluide réactif.

Dans des modes de réalisation particuliers, le procédé de montage comporte une étape préalable de choix des blocs de milieu réactif solide, de sorte que les plages de températures de réaction d'au moins un des composés réactifs au sein d'un réacteur thermochimique, ne recoupe pas entièrement une plage de température de réaction d'un composé réactif différent compris dans le milieu réactif solide au sein dudit réacteur thermochimique.

Selon un autre aspect, la présente invention vise un kit pour la mise en œuvre du procédé de montage objet de la présente invention, comportant :
- au moins deux blocs de milieu réactif solide distincts comportant respectivement un des composés réactifs différents ;
- des instructions pour la mise en œuvre dudit procédé de montage desdits blocs dans le réacteur thermochimique ;
- un élément séparateur apte à empêcher la migration de composé(s) réactif(s) d'un bloc de milieu réactif solide vers un autre, de préférence inerte vis-à-vis du fluide réactif, ledit élément séparateur étant dépourvu de composé réactif vis-à-vis du fluide réactif et comprenant du graphite naturel expansé.

Dans des modes de réalisation particuliers, le kit comporte en outre au moins un, de préférence une pluralité et préférentiellement l'ensemble, des éléments constitutifs suivants :
- une enveloppe de protection thermiquement conductrice ;
- un élément déverseur destiné à coopérer avec des moyens de diffusion d'un fluide réactif d'un réacteur thermochimique.

L'utilisateur du kit peut choisir quels sont les blocs de milieu réactif solide qui sont mis en place dans l'enveloppe de protection thermiquement conductrice en fonction des conditions d'utilisation.

### Brève description des figures

D'autres avantages, buts et caractéristiques particuliers de l'invention ressortiront de la description non-limitative qui suit de modes de réalisation particuliers d'un produit selon l'invention, en regard des dessins annexés, dans lesquels :

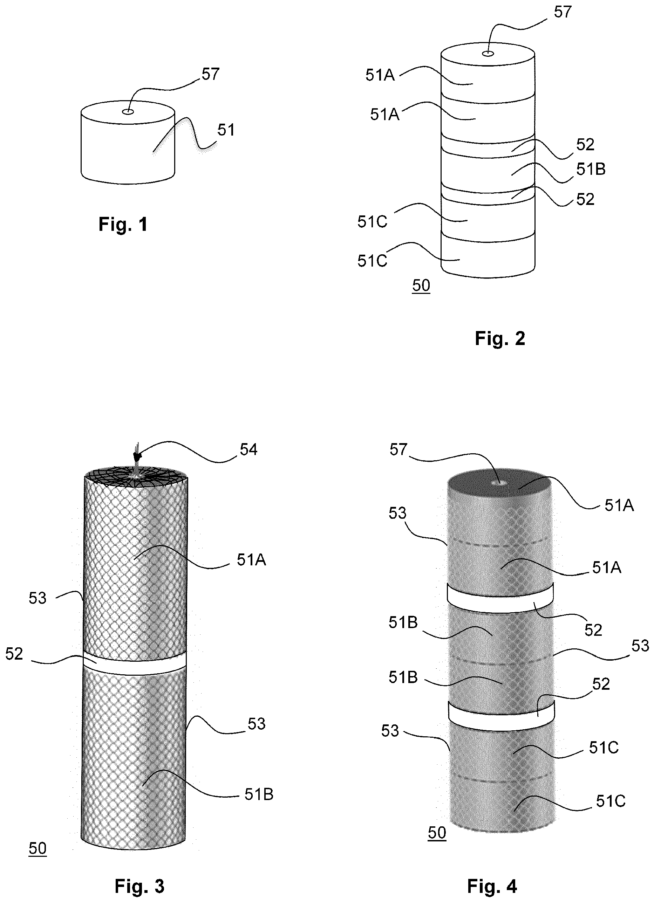

- la figure 1 représente, selon un mode de réalisation particulier de l'invention, un bloc de milieu réactif solide destiné à être mis en œuvre dans un réacteur thermochimique, comportant au moins un composé réactif solide.
- la figure 2 représente, selon un mode de réalisation particulier de l'invention, un produit sous forme globalement cylindrique, comportant un milieu réactif solide sous forme d'une pluralité de blocs empilés, chaque bloc comportant respectivement un des composés réactifs différents (A, B ou C), et un élément séparateur, de préférence inerte vis-à-vis du fluide réactif, étant intercalé entre les blocs de milieu réactif solide comportant des composés réactifs différents.
- la figure 3 représente selon un mode de réalisation particulier de l'invention, un produit de forme globalement cylindrique, comportant un milieu réactif solide sous forme de deux blocs empilés, chaque bloc comportant respectivement un des composés réactifs différents (A ou B), un élément séparateur, de préférence inerte vis-à-vis du fluide réactif, étant intercalé entre les blocs de milieu réactif solide comportant des composés réactifs différents et, chaque bloc de milieu réactif solide comportant un composé réactif étant individuellement contenus dans une enveloppe de protection thermiquement conductrice.
- la figure 4 représente selon un mode de réalisation particulier de l'invention, un produit de forme globalement cylindrique, comportant un milieu réactif solide sous forme d'une pluralité de blocs empilés, chaque bloc comportant respectivement un des composés réactifs différents (A, B ou C), un élément séparateur, de préférence inerte vis-à-vis du fluide réactif, étant intercalé entre les blocs de milieu réactif solide comportant des composés réactifs différents et, les blocs de milieu réactif solide comportant un même composé réactif étant contenus dans une même enveloppe.

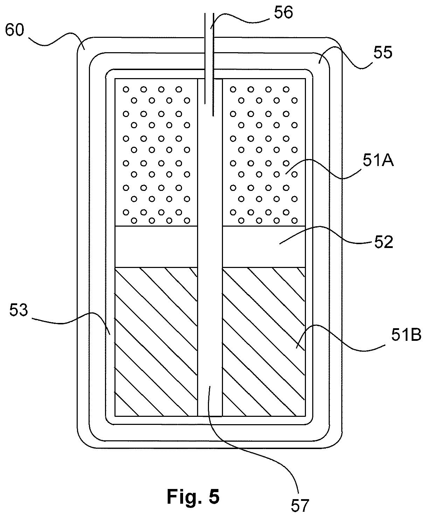

- la figure 5 représente selon un mode de réalisation particulier de l'invention, une vue en coupe longitudinale d'un réacteur thermochimique de forme cylindrique, dont le logement de réception de milieu réactif solide comporte un produit selon l'invention comprenant un milieu réactif solide sous forme de deux blocs empilés, chaque bloc comportant respectivement un des composés réactifs différents (A ou B), un élément séparateur, de préférence inerte vis-à-vis du fluide réactif, étant intercalé entre les blocs de milieu réactif solide comportant des composés réactifs différents et, les blocs de milieu réactif solide comportant respectivement un des composés réactifs différents A ou B ainsi que l'élément séparateur, de préférence inerte vis-à-vis du fluide réactif, étant contenus dans une même enveloppe de protection thermiquement conductrice.

### Description d'exemples de réalisation de l'invention

On note dès à présent que les figures ne sont pas à l'échelle.

La présente description est donnée à titre non limitatif, chaque caractéristique d'un mode de réalisation pouvant être mise en œuvre isolément ou combinée à toute autre caractéristique de tout autre mode de réalisation de manière avantageuse.

On note que le terme « un » est utilisé au sens « au moins un ».

La figure 1 illustre, selon un mode de réalisation particulier de l'invention, un bloc 51 de milieu réactif solide destiné à être mis en œuvre dans un réacteur thermochimique pour la production d'énergie thermique par réaction avec un fluide réactif, comportant au moins un composé réactif sous forme solide apte à réagir chimiquement avec ledit fluide réactif pour produire de la chaleur.

On entend dans la présente description par « bloc », un morceau compact de milieu réactif solide. La synthèse des blocs de milieu réactif solide comportant un composé réactif peut être réalisée selon un des modes opératoires connus de l'art antérieur de synthèse d'un milieu réactif solide destiné aux réacteurs thermochimiques. Par exemple, lorsque un composé réactif est un sel, cette synthèse peut comprendre le séchage préalable d'un sel réactif suivi d'un broyage du sel pour atteindre une granulométrie désirée, le sel étant par la suite inséré dans une matrice à base de GNE tout en maintenant l'ensemble à une température permettant d'éviter l'absorption d'humidité. Le mélange obtenu subi dans une étape finale une compression dans un moule adapté à la forme du réacteur thermochimique auquel est destiné le milieu réactif solide synthétisé. Le bloc 51 de milieu réactif solide ainsi obtenu peut se présenter sous la forme cylindrique lorsqu'il est destiné à un réacteur thermochimique dont la forme du logement de réception du milieu réactif solide est cylindrique, et sous la forme sphérique lorsqu'il est destiné à un réacteur thermochimique dont le logement de réception du milieu réactif solide est sphérique, etc.

Dans des modes de réalisation particuliers où un tel bloc 51 présente une forme cylindrique, la mise en contact du bloc 51 de milieu réactif solide avec le fluide réactif qui va réagir avec le composé réactif contenu dans le bloc 51, se fait de préférence dans une lumière centrale 57 du bloc 51. Cette mise en contact au centre du bloc 51 permet une bonne conductivité thermique vers la paroi du réacteur thermochimique qui contient le bloc 51, notamment lorsque le bloc 51 comprend du GNE dont la forme sous feuillets favorise les transferts thermiques selon une orientation radiale et non longitudinale, c'est-à-dire de l'axe central longitudinal du cylindre que représente le bloc 51 vers la surface extérieure du cylindre.

Il est industriellement avantageux que le milieu réactif solide soit réalisé sous forme de plusieurs blocs 51. Dans le cas de plusieurs blocs 51, ceux-ci sont de préférence de géométries complémentaires pour se conformer, une fois associés, à la géométrie du logement de réception du milieu réactif solide dans le réacteur. Un bloc 51 étant destiné à un logement de réception cylindrique d'un réacteur thermochimique, se présente par exemple sous la forme d'une tranche de cylindre, communément appelée « galette », ou encore sous la forme d'un quartier de cylindre (non représenté sur les figures), destiné à être juxtaposé avec d'autres blocs en forme de quartier de cylindre pour reconstituer un cylindre. Les blocs 51 peuvent par exemple être sous la forme de quartiers de demi-sphère lorsque le milieu réactif solide est destiné à être mis en place dans un réacteur thermochimique dont la forme du logement de réception du milieu réactif solide est sphérique.

Les composés réactifs différents peuvent être des sels réactifs. Les sels réactifs différents peuvent être choisis parmi les chlorures ammoniacates, par exemple, CaCl₂, LiCl, CuCl₂, SrCl₂, ZnCl₂,... Toute combinaison de deux ou plus de ces sels réactifs entre dans le cadre de la présente invention. Des milieux réactifs solides comportant de tels sels réactifs sont en particulier susceptibles de s'expanser lors de l'absorption du fluide et de se rétracter lors de la désorption du fluide.

**Tableau 1 : Présentation, pour des exemples de composition en composé(s) réactif(s) du milieu réactif solide, de l'énergie disponible d'un réacteur thermochimique en fonction de la température de la source chaude.**

| **ENERGIE DISPONIBLE EN FONCTION DE LA TEMPERATURE DE LA SOURCE CHAUDE** | | | |
|---|---|---|---|
| Composition en composé(s) réactif(s) du milieu réactif solide | Température de la source chaude | | |
| | 90°C | 130°C | 170°C |
| 100%BaCl2 | 80 % | 80 % | 80 % |
| 100%CaCl2 | 0 % | 90 % | 90 % |
| 100%MnCl2 | 0 % | 0 % | 100 % |
| 50%BaCl2 / 50%CaCl2 | 40 % | 85 % | 85 % |
| 50%CaCl2 / 50%MnCl2 | 0 % | 45 % | 95 % |
| 25%BaCl2 / 50%CaCl2 / 25%MnCl2 | 20 % | 65 % | 90 % |

La figure 2 illustre, selon un mode de réalisation particulier de l'invention, le produit 50 de forme globalement cylindrique, comportant un milieu réactif solide sous forme de blocs 51A, 51 B, 51C, empilés, chaque bloc comportant respectivement un des composés réactifs différents A, B ou C. La présence de plusieurs réactifs différents au sein du milieu réactif solide a pour avantage, lors de la mise en œuvre de ce milieu réactif au sein d'un réacteur thermochimique, de couvrir un spectre élargi de performances en termes de réactivité, de température et de cinétique de réaction, en phase de désorption ou d'absorption et cela sans avoir à changer de réacteur thermochimique. Cela est donc moins contraignant et moins chronophage. Dans ce mode de réalisation illustré par la figure 2, un élément séparateur 52, de préférence inerte vis-à-vis du fluide réactif, étant dépourvu de composé réactif vis-à-vis du fluide réactif et comprenant du graphite naturel expansé, est intercalé entre les blocs de milieu réactif solide comportant des composés réactifs différents. On entend dans la présente description par « inerte vis-à-vis du fluide réactif » que l'élément séparateur 52 n'est pas apte à réagir chimiquement avec le fluide réactif.

Cet élément séparateur 52 a pour avantage d'empêcher ou diminuer le phénomène de migration d'un composé réactif d'un bloc (par exemple 51A) de milieu réactif solide vers un autre bloc (par exemple 51 B) de milieu réactif solide.

Cet élément séparateur 52 est également dénué de composé réactif vis-à-vis du fluide réactif et comprend du GNE. De tels éléments séparateurs 52 comportant du GNE, intercalés entre les blocs 51 de milieu réactifs solide comportant des composés réactifs différents, améliorent avantageusement l'échange thermique grâce à la bonne conduction thermique du GNE.

Un élément séparateur 52 peut être sous forme d'un bloc tel que cela est illustré en figure 2. Ce bloc est de préférence inerte vis-à-vis du fluide réactif, dépourvu de composé réactif vis-à-vis du fluide réactif. Ledit bloc comprend du GNE ou est constitué de GNE.

L'épaisseur d'un bloc inerte vis-à-vis du fluide réactif est de préférence telle qu'elle permet d'assurer sa tenue mécanique lors des manipulations sans occuper un espace important dans le réacteur en comparaison de l'espace occupé par les blocs comportant un composé réactif.

L'épaisseur d'un bloc inerte vis-à-vis du fluide réactif peut par exemple être comprise entre 2 et 5 mm tandis que l'épaisseur d'un bloc comportant un composé réactif peut par exemple être de 60 mm.

La figure 3 illustre, selon un mode de réalisation particulier de l'invention, un produit 50 de forme globalement cylindrique, comportant un milieu réactif solide sous forme de deux blocs 51A, 51 B, empilés, chaque bloc comportant respectivement un des composés réactifs différents A ou B. Dans ce mode de réalisation particulier, un élément séparateur 52, de préférence inerte vis-à-vis du fluide réactif, étant dépourvu de composé réactif vis-à-vis du fluide réactif et comprenant du GNE, est intercalé entre les blocs 51A, 51 B de milieu réactif solide comportant des composés réactifs différents A et B, chaque bloc 51A, 51 B, de milieu réactif solide comportant un composé réactif différent étant individuellement contenu dans une enveloppe de protection 53 thermiquement conductrice. Cette enveloppe de protection 53 thermiquement conductrice peut aussi contenir un ou des élément(s) séparateur(s) 52. Dans un mode de réalisation non illustré par les figures, tous les blocs 51A, 51B, de milieu réactif solide et l'élément séparateur 52, sont compris dans une même enveloppe de protection 53 thermiquement conductrice.

Cette enveloppe de protection 53 protège le milieu réactif solide qu'elle contient en empêchant, ou au moins diminuant, le contact direct du milieu réactif solide avec les manipulateurs du milieu réactif solide et de manière générale, avec tout élément contenu dans le milieu extérieur à l'enveloppe de protection et avec lequel elle est susceptible d'être mise en contact.

On entend dans la présente description par « enveloppe de protection 53 thermiquement conductrice », le fait que cette enveloppe de protection 53 ne constitue pas une barrière thermique si bien que le produit 50 selon l'invention peut être mis en place tel quel dans le réacteur thermochimique, sans séparer le milieu réactif de l'enveloppe de protection 53, et que l'enveloppe de protection 53 n'influe alors avantageusement pas sur les échanges de chaleur se produisant dans les réacteurs thermochimiques. On englobe notamment, dans l'expression, aussi bien les enveloppes de protection 53 perforées, les flux thermiques pouvant alors circuler dans les perforations formées dans l'enveloppe de protection 53, que les enveloppes de protection 53 formées dans un matériau thermiquement conducteur.

Cette enveloppe de protection 53 peut être formée en un matériau conférant à l'enveloppe de protection 53 l'aptitude d'être déformer élastiquement. L'enveloppe de protection 53 peut être en matériau thermoplastique de type polypropylène ou polyamide.

Comme illustré sur la figure 3, dans des modes de réalisation particuliers, l'enveloppe de protection 53 est perforée de sorte qu'elle forme un maillage, de préférence dont l'espace vide dû à la perforation représente entre 60% et 95% de la surface de l'enveloppe de protection 53. Cette enveloppe de protection 53 autorise des échanges thermiques entre le milieu réactif solide et la paroi intérieure du réacteur thermochimique auquel est destiné le produit 50.

L'enveloppe de protection 53 peut être fermée autour du milieu réactif solide qu'elle contient. Dans des modes de réalisation particuliers comme celui illustré en figure 3, les enveloppes de protection 53 sont fermées autour du milieu réactif qu'elles contiennent, par exemple par un lien 54 formant une ligature. Le volume occupé par le milieu réactif solide dans le réacteur thermochimique est typiquement inférieur au volume du logement de réception du milieu réactif solide dans ce réacteur pour permettre le gonflement du milieu réactif solide lorsqu'il absorbe le fluide réactif. Cette particularité est mise à profit pour loger dans le réacteur thermochimique la géométrie irrégulière d'une extrémité fermée (par exemple par un lien 54) de l'enveloppe de protection 53.

Dans des modes de réalisation particuliers, l'enveloppe de protection 53 n'est pas perforée mais est formée dans un matériau thermiquement conducteur. Par exemple, l'enveloppe de protection 53, peut être constituée d'une membrane comportant une face interne en vis-à-vis du milieu réactif solide et une face externe opposée. La membrane est thermoconductrice. La membrane ne crée pas une résistance thermique préjudiciable à la performance du réacteur thermochimique dans son fonctionnement thermochimique et n'influe pas sur les échanges de chaleur, de matière ou de diffusion de gaz liés au réacteur thermochimique. En effet, cette membrane peut être constituée en un matériau thermoconducteur. L'enveloppe de protection peut consister en une telle membrane ou être du type multicouches, dont une couche est constituée par une telle membrane.

Dans des modes de réalisation particuliers, la membrane peut être microporeuse et imperméable aux liquides. On entend dans la présente description par « membrane microporeuse » le fait que cette membrane est percée de micropores, de préférence de nombreux micropores au centimètre carré, par exemple d'un diamètre compris entre 0,02 micromètres et 40 micromètres. Un liquide (par exemple une goutte d'eau) ne peut pas traverser cette membrane, tandis qu'un gaz, étant constitué de molécules fortement distantes les unes des autres (par exemple la vapeur d'eau), est apte à traverser la membrane. La membrane microporeuse est fermée de façon hermétique autour du milieu réactif solide. Une telle membrane s'avère particulièrement avantageuse en ce qu'elle assure un haut degré de protection du milieu réactif solide, notamment vis-à-vis des dégradations liées à l'humidité. En effet, la reprise d'humidité par le milieu réactif solide est un problème récurrent tout au long de la mise en œuvre de ce dernier. On sait que les systèmes thermochimiques mettent en œuvre un gaz (ammoniac, méthylamine,...) et un milieu réactif solide comprenant en particulier des ions chlorure qui dans certaines conditions, en particulier d'humidité résiduelle, sont chimiquement agressifs et entrainent une dégradation importante des performances du réacteur thermochimique.

Une telle membrane imperméable aux liquides, en particulier à l'eau liquide, peut être formée dans des matériaux respirant au sens de la norme internationale ISO 11092 liée aux textiles (par exemple le Gore-Tex®).

Dans des modes de réalisation particuliers de l'invention, la membrane peut être imperméable aux fluides. L'enveloppe de protection peut consister en une telle membrane ou être du type multicouches, dont une couche est constituée par une telle membrane. On entend dans la présente description par « membrane imperméable aux fluides » le fait que la membrane n'est pas traversée par des liquides ou des gaz. Cette membrane imperméable est hermétiquement fermée autour du milieu réactif solide et permet avantageusement de diminuer fortement la dégradation liée à la reprise d'humidité. Une telle membrane est particulièrement avantageuse pour un stockage du milieu réactif solide sous atmosphère protectrice contrôlée (sous azote par exemple) ou sous vide primaire. En effet, la membrane imperméable hermétiquement fermée permet de placer le milieu réactif solide sous sa propre atmosphère protectrice, comprise dans la membrane avec le milieu réactif solide, et donc de stocker l'ensemble dans un local à l'air libre.

La figure 4 illustre, selon un mode de réalisation particulier de l'invention, un produit 50 de forme globalement cylindrique, comportant un milieu réactif solide sous forme de six blocs 51A, 51 B, 51C, empilés, chaque bloc comportant respectivement un des composés réactifs différents A, B ou C. Dans ce mode de réalisation particulier, un élément séparateur 52, de préférence inerte vis-à-vis du fluide réactif, étant dépourvu de composé réactif vis-à-vis du fluide réactif et comprenant du GNE, est intercalé entre les blocs 51A, 51B, 51C, de milieu réactif solide comportant un composé réactif différent A, B, ou C, les blocs 51A, 51 B, 51C de milieu réactif solide comportant un même composé réactif A, B ou C, étant contenus dans une même enveloppe de protection 53 thermiquement conductrice. Dans un mode de réalisation particulier (non représenté sur les figures), les blocs 51A, 51B, 51C de milieu réactif solide comportant respectivement des composés réactifs différents A, B ou C, peuvent être compris dans une même enveloppe de protection 53 thermiquement conductrice.

Dans des modes de réalisation particuliers de l'invention, les éléments séparateurs 52, de préférence inertes vis-à-vis du fluide réactif peuvent être compris, seul ou avec des blocs 51 de milieu réactif solide, dans une enveloppe de protection 53 thermiquement conductrice.

Un réacteur thermochimique classique est de forme généralement cylindrique, hémisphérique ou sphérique et est fermé à chacune de ses extrémités par une paroi fixe soudée au corps cylindrique ou formée d'un seul tenant avec celui-ci. Il est muni d'un logement de réception de milieu réactif solide, généralement de même forme que celle du réacteur thermochimique qui le contient (cylindrique, hémisphérique, sphérique,...), et de moyens de diffusion du fluide réactif mettant en communication le milieu réactif solide avec un réservoir contenant le fluide réactif et permettant la circulation du fluide réactif dans un sens ou dans l'autre selon la phase réactionnelle. Par exemple, ces moyens de diffusion du fluide réactif peuvent comprendre un élément déverseur qui peut, par exemple, être de forme tubulaire et dont le rôle est de déverser le fluide réactif dans le logement de réception de milieu réactif du réacteur thermochimique. Un tel réacteur classique est également doté de moyens de chauffage du milieu réactif solide, qui seront mis en fonctionnement pour désorber le fluide réactif et régénérer le composé réactif solide. Par ailleurs, le réacteur est généralement muni d'un système de refroidissement rapide du milieu réactif solide généralement utilisé en fin de phase de régénération.

La figure 5 illustre, selon un mode de réalisation particulier de l'invention, une vue en coupe longitudinale d'un réacteur thermochimique 60 dont le logement de réception 55 de milieu réactif solide est de forme cylindrique, comportant un produit 50 selon l'invention comprenant un milieu réactif solide sous forme de deux blocs 51A, 51B, empilés, chaque bloc comportant respectivement un des composés réactifs différents A ou B. Un élément séparateur 52, de préférence inerte vis-à-vis du fluide réactif, étant dépourvu de composé réactif vis-à-vis du fluide réactif et comprenant du GNE, est intercalé entre les blocs 51A, 51B, de milieu réactif solide comportant des composés réactifs différents A et B. Les blocs 51A, 51B, de milieu réactif solide comportant un des composés réactifs différents A ou B, ainsi que l'élément séparateur 52, sont contenus dans une même enveloppe de protection 53 thermiquement conductrice. Le produit 50 est donc placé dans un logement de réception 55 d'un réacteur thermochimique 60.

Dans les modes de réalisations où l'enveloppe de protection 53 comprend une membrane, la membrane est hermétiquement fermée sur le milieu réactif solide. Cependant, le fluide réactif apte à réagir avec le milieu réactif solide doit pouvoir atteindre le milieu réactif solide. Il est connu de l'homme du métier que dans un milieu réactif solide composite à base de GNE et d'un sel réactif, les transferts massiques et thermiques s'effectuent de manière privilégiée selon une orientation radiale et non longitudinale et cela à cause de la structure en feuillets du GNE. Il est donc avantageux que les moyens de diffusons du fluide réactif du réacteur thermochimique 60, permettent l'arrivée du fluide réactif dans la lumière centrale 57 du milieu réactif solide de forme cylindrique pour que les flux thermiques partent, de manière radiale, de la lumière centrale 57 du milieu réactif solide, vers la paroi interne du logement de réception 55 de milieu réactif du réacteur thermochimique 60. Afin de réaliser cela, dans des modes de réalisation, comme illustré en figure 7, les moyens de diffusions du fluide réactif du réacteur thermochimique 60 comprennent un élément déverseur 56, positionné dans la lumière centrale 57 du milieu réactif solide de forme cylindrique. Dans le mode de réalisation illustré par la figure 7, l'élément déverseur 56 est situé dans la lumière centrale 57 du milieu réactif solide au niveau de l'axe central longitudinal du cylindre formé par le milieu réactif solide.

Dans des modes de réalisation, la membrane est fermée hermétiquement autour de l'élément déverseur 56 du dispositif d'alimentation en fluide réactif (par exemple ammoniac) du réacteur thermochimique 60.

Dans des modes de réalisation particuliers de la présente invention, l'élément déverseur 56 peut être dissocié du réacteur thermochimique 60 et des autres moyens de diffusion du fluide réactif et ainsi être stocké avec le produit 50 tout en étant dans la lumière centrale 57 du milieu réactif et hermétiquement attaché à la membrane. Cet élément déverseur 56, lorsqu'il est stocké avec le produit 50, tout en étant dans la lumière centrale 57 du milieu réactif et en étant hermétiquement attaché à la membrane, est apte à empêcher des fluides d'entrée en contact avec le produit 50 durant la phase de stockage afin de conserver l'avantage de l'imperméabilité de la membrane.

## Revendications

1. Produit (50) destiné à être mis en œuvre dans un réacteur thermochimique (60) pour la production d'énergie thermique par réaction avec un fluide réactif, comportant un milieu réactif solide comprenant au moins deux composés réactifs différents sous forme solide, chacun desdits deux composés réactifs étant apte à réagir chimiquement avec ledit fluide réactif pour produire de la chaleur ledit milieu réactif solide se présentant sous forme d'au moins deux blocs distincts (51A, 51B), de préférence juxtaposés ou empilés, chacun desdits blocs comportant respectivement un desdits composés réactifs différents et, ledit produit (50) comportant au moins un élément séparateur (52) apte à empêcher la migration de composé(s) réactif(s) d'un bloc (51A) de milieu réactif solide vers un autre bloc (51B), ledit élément séparateur (52) étant intercalé entre des blocs (51A, 51B) de milieu réactif solide différents et étant de préférence inerte vis-à-vis du fluide réactif **caractérisé en ce que**, l'élément séparateur (52) est dépourvu de composé réactif vis-à-vis du fluide réactif et comprend du graphite naturel expansé.

2. Produit (50) selon la revendication 1, dans lequel les composés réactifs sont choisis de sorte à ce qu'un premier des composés réactifs comporte une plage de température de régénération, en phase de désorption du fluide réactif au sein d'un réacteur thermochimique, qui ne recoupe pas entièrement une plage de température de régénération d'un deuxième des composés réactifs en phase de désorption dudit fluide réactif dans les mêmes conditions opératoires, notamment de température et de pression, visées pour la mise en œuvre du réacteur thermochimique (60).

3. Produit (50) selon la revendication 1 ou 2, dans lequel au moins un des deux composés réactifs est un sel, de préférence les deux composés réactifs sont des sels.

4. Produit (50) selon l'une quelconque des revendications 1 à 3, dans lequel le milieu réactif solide comprend du graphite naturel expansé, en tant que matrice support des composés réactif.

5. Produit (50) selon l'une quelconque des revendications 1 à 4, dans lequel au moins un desdits blocs (51A) a une densité plus faible que les autres blocs (51 B).

6. Produit (50) selon l'une quelconque des revendications 1 à 5, dans lequel au moins un desdits blocs (51A) a une teneur en composé réactif plus faible que la teneur en composé réactif des autres blocs (51 B).

7. Produit (50) selon l'une quelconque des revendications 1 à 6, dans lequel au moins un bloc (51) de milieu réactif solide comportant au moins un des composés réactifs différents est contenu dans une enveloppe de protection (53) thermiquement conductrice.

8. Produit (50) selon la revendication 7, dans lequel plusieurs blocs (51) de milieu réactif solide sont contenus dans la même enveloppe de protection (53) thermiquement conductrice.

9. Réacteur thermochimique (60) comportant un produit (50) selon l'une quelconque des revendications 1 à 8, ledit produit (50) étant disposé dans un logement de réception (55) de milieu réactif solide dudit réacteur thermochimique (60) et ledit produit (50) comportant un milieu réactif solide se présentant sous forme d'au moins deux blocs distincts (51A, 51 B) de milieu réactif solide, lesdits blocs (51A, 51 B) étant juxtaposés ou empilés dans le logement de réception (55) de milieu réactif solide dudit réacteur thermochimique (60), et étant séparés par un élément séparateur (52) dépourvu de composé réactif vis-à-vis du fluide réactif et comprenant du graphite naturel expansé.

10. Procédé de montage d'un produit (50) selon l'une quelconque des revendications 1 à 8 dans un réacteur thermochimique (60) pour la production d'énergie thermique par réaction avec un fluide réactif, comportant la mise en place du produit (50) dans un logement de réception (55) de milieu réactif solide dudit réacteur thermochimique (60) et selon lequel, le produit (50) comporte un milieu réactif solide se présentant sous forme d'au moins deux blocs distincts (51A, 51B), lesdits blocs (51A, 51B) étant juxtaposés ou empilés dans le logement de réception (55) de milieu réactif solide du réacteur thermochimique (60), et étant séparés par un élément séparateur (52) dépourvu de composé réactif vis-à-vis du fluide réactif et comprenant du graphite naturel expansé.

11. Procédé de montage selon la revendication 10, comportant une étape préalable de choix des blocs (51) de milieu réactif solide, de sorte que les plages de températures de réaction d'au moins un des composés réactifs au sein d'un réacteur thermochimique (60), ne recoupe pas entièrement une plage de température de réaction d'un composé réactif différent compris dans le milieu réactif solide au sein dudit réacteur thermochimique (60).

12. Kit pour la mise en œuvre d'un procédé de montage selon l'une quelconque des revendications 10 ou 11, comportant :
- au moins deux blocs (51A, 51B) de milieu réactif solide distincts comportant respectivement un des composés réactifs différents ;
- des instructions pour la mise en œuvre dudit procédé de montage desdits blocs (51A, 51B) dans le réacteur thermochimique (60) ;
- un élément séparateur (52) apte à empêcher la migration de composé(s) réactif(s) d'un bloc (51) de milieu réactif solide vers un autre, de préférence inerte vis-à-vis du fluide réactif ledit élément séparateur (52) étant dépourvu de composé réactif vis-à-vis du fluide réactif et comprenant du graphite naturel expansé.

13. Kit selon la revendication 12, comprenant en outre au moins un des éléments constitutifs suivants :
- une enveloppe de protection (53) thermiquement conductrice ;
- un élément déverseur (56) destiné à coopérer avec des moyens de diffusion d'un fluide réactif d'un réacteur thermochimique (60).

## Patentansprüche

1. Produkt (50), das dazu bestimmt ist, in einem thermochemischen Reaktor (60) für die Erzeugung von thermischer Energie durch Reaktion mit einem reaktiven Fluid eingesetzt zu werden, ein festes reaktives Medium umfassend, das mindestens zwei unterschiedliche reaktive Verbindungen in fester Form umfasst, wobei jede der zwei reaktiven Verbindungen in der Lage ist, chemisch mit dem reaktiven Fluid zu reagieren, um Wärme zu erzeugen, wobei sich das feste reaktive Medium in Form von mindestens zwei getrennten Blöcken (51A, 51B), vorzugsweise nebeneinander oder gestapelt, darstellt, wobei jeder der Blöcke jeweils eine der unterschiedlichen reaktiven Verbindungen umfasst und wobei das Produkt (50) mindestens ein Trennelement (52) umfasst, das in der Lage ist, die Migration von reaktiver/n Verbindung(en) von einem Block (51A) festen reaktiven Mediums zu einem anderen Block (51B) zu verhindern, wobei das Trennelement (52) zwischen unterschiedlichen Blöcken (51A, 51B) festen reaktiven Mediums eingefügt ist und vorzugsweise dem reaktiven Fluid gegenüber inert ist, **dadurch gekennzeichnet, dass** das Trennelement (52) keine Verbindung aufweist, die gegenüber dem reaktiven Fluid reaktiv ist, und expandierten Naturgraphit umfasst.

2. Produkt (50) nach Anspruch 1, wobei die reaktiven Verbindungen so ausgewählt sind, dass eine erste der reaktiven Verbindungen einen Regenerationstemperaturbereich in der Desorptionsphase des reaktiven Fluids innerhalb eines thermochemischen Reaktors umfasst, der sich mit einem Regenerationstemperaturbereich einer zweiten der reaktiven Verbindungen in der Desorptionsphase des reaktiven Fluids unter denselben Betriebs-, insbesondere Temperatur- und Druck-, Bedingungen, die für den Einsatz des thermochemischen Reaktors (60) vorgesehen sind, nicht vollständig überschneidet.

3. Produkt (50) nach Anspruch 1 oder 2, wobei mindestens eine der zwei reaktiven Verbindungen ein Salz ist, vorzugsweise die zwei reaktiven Verbindungen Salze sind.

4. Produkt (50) nach einem der Ansprüche 1 bis 3, wobei das feste reaktive Medium expandierten Naturgraphit als Trägermatrix der reaktiven Verbindungen umfasst.

5. Produkt (50) nach einem der Ansprüche 1 bis 4, wobei mindestens einer der Blöcke (51A) eine geringere Dichte aufweist als die anderen Blöcke (51B).

6. Produkt (50) nach einem der Ansprüche 1 bis 5, wobei mindestens einer der Blöcke (51A) einen geringeren Gehalt an reaktiver Verbindung aufweist als den Gehalt der anderen Blöcke (51B) an reaktiver Verbindung.

7. Produkt (50) nach einem der Ansprüche 1 bis 6, wobei mindestens ein Block (51) festen reaktiven Mediums, der mindestens eine der unterschiedlichen reaktiven Verbindungen umfasst, in einer thermisch leitenden Schutzhülle (53) enthalten ist.

8. Produkt (50) nach Anspruch 7, wobei mehrere Blöcke (51) festen reaktiven Mediums in derselben thermisch leitenden Schutzhülle (53) enthalten sind.

9. Thermochemischer Reaktor (60), der ein Produkt (50) nach einem der Ansprüche 1 bis 8 umfasst, wobei das Produkt (50) in einer Kammer (55) zum Aufnehmen von festem reaktivem Medium des thermochemischen Reaktors (60) angeordnet ist und wobei das Produkt (50) ein festes reaktives Medium umfasst, das sich in Form von mindestens zwei getrennten Blöcken (51A, 51B) festen reaktiven Mediums darstellt, wobei die Blöcke (51A, 51B) in der Kammer (55) zum Aufnehmen von festem reaktivem Medium des thermochemischen Reaktors (60) nebeneinander oder gestapelt sind und durch ein Trennelement (52) getrennt sind, das keine Verbindung aufweist, die gegenüber dem reaktiven Fluid reaktiv ist, und expandierten Naturgraphit umfasst.

10. Verfahren zum Befestigen eines Produkts (50) nach einem der Ansprüche 1 bis 8 in einem thermochemischen Reaktor (60) für die Erzeugung von thermischer Energie durch Reaktion mit einem reaktiven Fluid, das das Einbringen des Produkts (50) in eine Kammer (55) zum Aufnehmen von festem reaktivem Medium des thermochemischen Reaktors (60) umfasst, und wobei das Produkt (50) ein festes reaktives Medium umfasst, das sich in Form von mindestens zwei getrennten Blöcken (51A, 51B) darstellt, wobei die Blöcke (51A, 51B) in der Kammer (55) zum Aufnehmen von festem reaktivem Medium des thermochemischen Reaktors (60) nebeneinander oder gestapelt sind und durch ein Trennelement (52) getrennt sind, das keine Verbindung aufweist, die gegenüber dem reaktiven Fluid reaktiv ist, und expandierten Naturgraphit umfasst.

11. Befestigungsverfahren nach Anspruch 10, das einen vorausgehenden Schritt des Auswählens der Blöcke (51) festen reaktiven Mediums so umfasst, dass die Reaktionstemperaturbereiche von mindestens einer der reaktiven Verbindungen innerhalb eines thermochemischen Reaktors (60) einen Reaktionstemperaturbereich einer sich unterscheidenden reaktiven Verbindung, die in dem festen reaktiven Medium umfasst ist, innerhalb des thermochemischen Reaktors (60) nicht vollständig überschneidet.

12. Set für die Umsetzung eines Befestigungsverfahrens nach einem der Ansprüche 10 oder 11, umfassend:
- mindestens zwei getrennte Blöcke (51A, 51B) festen reaktiven Mediums, die jeweils eine der unterschiedlichen reaktiven Verbindungen umfassen;
- Anweisungen für die Umsetzung des Verfahrens zum Befestigen der Blöcke (51A, 51B) im thermochemischen Reaktor (60);
- ein Trennelement (52), das in der Lage ist, die Migration von reaktiver/n Verbindung(en) von einem Block (51A) festen reaktiven Mediums zu einem anderen zu verhindern, das vorzugsweise dem reaktiven Fluid gegenüber inert ist, wobei das Trennelement (52) keine Verbindung aufweist, die gegenüber dem reaktiven Fluid reaktiv ist, und expandierten Naturgraphit umfasst.

13. Set nach Anspruch 12, das weiter mindestens eines der folgenden Bestandteile umfasst:
- eine thermisch leitende Schutzhülle (53);
- ein Überlaufelement (56), das dazu bestimmt ist, mit Mitteln zum Verteilen eines reaktiven Fluids eines thermochemischen Reaktors (60) zusammenzuwirken.

## Claims

1. Product (50) intended to be implemented in a thermochemical reactor (60) for the production of thermal energy by reaction with a reactant fluid, comprising a solid reactant medium comprising at least two different reactant compounds in solid form, with each one of said reactant compounds able to chemically react with said reactant fluid in order to produce heat said solid reactant medium having the form of at least two separate blocks (51A, 51B), preferably juxtaposed or stacked, with each one of said blocks respectively comprising one of said different reactant compounds and, said product (50) comprising at least one separator element (52) able to prevent the migration of the reactant compound or compounds of a block (51A) of solid reactant medium to another block (51B), said separator element (52) being inserted between different blocks (51A, 51B) of solid reactant medium and being preferably inert with regards to the reactant fluid **characterised in that**, the separator element (52) is devoid of reactant compound with regards to the reactant fluid and comprises expanded natural graphite.

2. Product (50) according to claim 1, wherein the reactant compounds are selected in such a way that a first of the reactant compounds comprises a regeneration temperature range, in the desorption phase of the reactant fluid within a thermochemical reactor, that does not fully overlap a regeneration temperature range of a second of the reactant compounds in the desorption phase of said reactant fluid in the same operating conditions, in particular of temperature and of pressure, aimed for the implementation of the thermochemical reactor (60).

3. Product (50) according to claim 1 or 2, wherein at least one of the two reactant compounds is a salt, preferably the two reactant compounds are salts.

4. Product (50) according to any of claims 1 to 3, wherein the solid reactant medium comprises expanded natural graphite, as a support matrix of the reactant compounds.

5. Product (50) according to any of claims 1 to 4, wherein at least one of said blocks (51A) has a lower density than the other blocks (51B).

6. Product (50) according to any of claims 1 to 5, wherein at least one of said blocks (51A) has a content in reactant compound that is lower than the content in reactant compound of the other blocks (51B).

7. Product (50) according to any of claims 1 to 6, wherein at least one block (51) of solid reactant medium comprising at least one of the different reactant compounds is contained in a thermally conductive protective casing (53).

8. Product (50) according to claim 7, wherein several blocks (51) of solid reactant medium are contained in the same thermally conductive protective casing (53).

9. Thermochemical reactor (60) comprising a product (50) according to any of claims 1 to 8, said product (50) being arranged in a housing for receiving (55) solid reactant medium of said thermochemical reactor (60) and said product (50) comprising a solid reactant medium having the form of at least two separate blocks (51A, 51B) of solid reactant medium, said blocks (51A, 51B) being juxtaposed or stacks in the housing for receiving (55) solid reactant medium of said thermochemical reactor (60), and being separated by a separator element (52) devoid of reactant compound with regards to the reactant fluid and comprising expanded natural graphite.

10. Method for mounting a product (50) according to any of claims 1 to 8 in a thermochemical reactor (60) for the production of thermal energy by reaction with a reactant fluid, comprising the installation of the product (50) in a housing for receiving (55) solid reactant medium of said thermochemical reactor (60) and according to which, the product (50) comprises a solid reactant medium having the form of at least two separate blocks (51A, 51B), said blocks (51A, 51B) being juxtaposed or stacked in the housing for receiving (55) solid reactant medium of the thermochemical reactor (60), and being separated by a separator element (52) devoid of reactant compound with regards to the reactant fluid and comprising expanded natural graphite.

11. Method for mounting according to claim 10, comprising a prior step of choosing blocks (51) of solid reactant medium, in such a way that the reaction temperature ranges of at least one of the reactant compounds within a thermochemical reactor (60), does not fully overlap a different reaction temperature range of a reactant compound included in the solid reactant medium within said thermochemical reactor (60).

12. Kit for the implementation of method for mounting according to any of claims 10 or 11, comprising:
- at least two separate blocks (51A, 51B) of solid reactant medium respectively comprising one of the different reactant compounds;
- instructions for the implementation of said method for mounting of said blocks (51A, 51B) in the thermochemical reactor (60);
- a separator element (52) able to prevent the migration of the reactant compound or compounds of a block (51) of solid reactant medium to another, preferably inert with respect to the reactant fluid said separator element (52) being devoid of reactant compound with respect to the reactant fluid and comprising expanded natural graphite.

13. Kit according to claim 12, further comprising at least one of the following constituting elements:
- a thermally conductive protective casing (53);
- an overflow element (56) intended to cooperate with means for diffusing a reactant fluid of a thermochemical reactor (60).
